# EUROPÄISCHE PATENTSCHRIFT

(11) **EP 2 684 998 B1**
(45) Veröffentlichungstag und Bekanntmachung des Hinweises auf die Patenterteilung: **09.03.2016**
(21) Anmeldenummer: 13171284.6
(22) Anmeldetag: 10.06.2013
(51) Int. Cl.: B65G 15/34, B65G 17/08, D21F 7/08, D21F 7/10, F16G 3/02

(54) **Endloses Band sowie Verfahren zur Herstellung desselben**
Endless belt and method for the production thereof
Bande continue et son procédé de fabrication

(30) Priorität: 13.07.2012 DE 202012102608 U
(43) Veröffentlichungstag der Anmeldung: 15.01.2014
(73) Patentinhaber: Heimbach GmbH & Co. KG, 52353 Düren (DE)
(72) Erfinder: Zils, Frank, 52399 Merzenich (DE)
(74) Vertreter: Albrecht, Ralf

(56) Entgegenhaltungen:
- WO-A1-02/29157
- GB-A- 2 060 016
- JP-A- 2010 031 394

## Beschreibung

Die Erfindung betrifft ein endloses Band mit einer sich über die gesamte Fläche des Bandes erstreckenden Trägerstruktur, die mit zumindest einer sich ebenfalls über die gesamte Fläche des Bandes erstreckenden Beschichtung versehen ist, sowie ein Verfahren zur Herstellung eines solchen Bandes.

Im Stand der Technik werden ein- oder beidseitig beschichtete, endlose Bänder als Transport- bzw. Förderbänder, aber auch als Papiermaschinenbespannungen, beispielsweise als Pressbänder für Pressen mit verlängertem Pressenspalt, Transferbänder oder Kalanderbänder eingesetzt. Als Trägerstruktur werden mehrlagige Gewebe verwendet, die entweder endlos gewebt, d.h. rundgewebt sind oder flachgewebt und dann mittels einer Naht endlos gemacht sind. Solche beschichteten Endlosbänder sind beispielsweise aus der DE 38 20 571 A1, DE 10 2005 044 014 A1 oder aus der WO 98/361116 bekannt. Als Trägerstruktur kommen auch sogenannte Drahtgliederbänder in Frage, die aus einer Vielzahl von sich überlappenden und im Überlappungsbereich mittels Steckdrähten gelenkig verbundenen Drahtwendeln aufgebaut sind, welche sich über die gesamte Breite der Bänder erstrecken (vgl. EP 0 658 649 A1, EP 0 834 615 A1).

Bei endlosen Bänder der vorbeschriebenen Art werden die Beschichtungen in Endlosrichtung (auch Umfangs- oder Laufrichtung) aufgetragen. Die Bänder können deshalb nur in einer Breite hergestellt werden, die der maximalen Breite der jeweils vorhandenen Beschichtungsmaschinen entspricht. Derzeit haben Beschichtungsmaschinen eine maximale Beschichtungsbreite von 6 m. Es besteht jedoch ein Bedarf an endlosen Bändern mit sich über die gesamte Fläche des Bandes erstreckender Polymerbeschichtung, die eine wesentlich größere Breite haben.

Ein solcher Bedarf kann durch ein endloses Band gedeckt werden, bei dem ein Bandstreifen spiralförmig (korrekter: wendelförmig) quer zur vorgesehenen Laufrichtung über zwei Rollen gewickelt wird (WO 02/29157 A1). Dabei ist der Bandstreifen doppellagig ausgebildet, wobei die obere Lage mit einem Polymerfilm versehen sein kann. Diese sogenannte Spiralwickeltechnik ist jedoch aufwändig.

Daneben ist es bekannt, Papiermaschinenbänder aus mehreren, in Laufrichtung hintereinander angeordneten Bandsegmenten zusammenzusetzen, die sich über in Querrichtung erstreckende Nähte miteinander verbunden sind. Durch Auswahl der Anzahl der Bandsegmente soll die Länge der Papiermaschinenbespannung in Laufrichtung an die jeweiligen Längenanforderungen in der Papiermaschine angepasst werden (DE 30 34 709 A1 bzw. GB 2060016 A, WO 2008/068074 A1).

Der Erfindung liegt die Aufgabe zugrunde, ein endloses Band mit einer sich über die gesamte Fläche des Bandes erstreckenden Polymerbeschichtung derart auszubilden, dass seine Breite nicht von der Beschichtungsbreite einer jeweils vorhandenen Beschichtungsmaschine abhängt, sodass solche Bänder in Breiten herstellbar sind, die wesentlich größer sind als bisher möglich. Eine weitere Aufgabe besteht darin, ein Verfahren zur Herstellung eines solchen Bandes bereitzustellen.

Die sich auf das Band selbst beziehende Aufgabe wird erfindungsgemäß dadurch gelöst, dass das Band aus mehreren, in Endlosrichtung hintereinander angeordneten Bandsegmenten zusammengesetzt ist, die jeweils ein eigenes Trägerstruktursegment mit eigener Beschichtung aufweisen, wobei die Erstreckung der Bandsegmente und deren Trägerstruktursegmente mit Beschichtung in einer zur Endlosrichtung senkrechten Querrichtung der Erstreckung des Bandes in dieser Richtung entspricht und die Bandsegmente über sich in Querrichtung erstreckende Nähte miteinander verbunden sind.

Grundgedanke der Erfindung ist es also, das Band aus mehreren Bandsegmenten zusammenzusetzen. Dies eröffnet die Möglichkeit, die Erstreckung der Bandsegmente in Endlosrichtung (Laufrichtung) an die Beschichtungsbreite der jeweils vorhandenen Beschichtungsmaschine anzupassen, so dass das Bandsegment in Querrichtung des Bandes in einem einzigen Beschichtungsgang durch Relativbewegung zwischen Beschichtungsmaterial und Trägerstruktursegmenten in dieser Richtung beschichtet werden kann, und zwar theoretisch in beliebiger Länge, so dass das erfindungsgemäß zusammengesetzte Band in einer ebenfalls beliebigen Breite herstellbar ist. Damit wird der Anwendungsbereich gattungsgemäßer Bänder stark erweitert, weil solche Bänder jetzt auch in Maschinen eingesetzt werden können, deren Breite weit größer ist als die bisher bekannten Beschichtungsbreiten von Beschichtungsmaschinen. Dabei soll der Begriff " Beschichtung" auch den Auftrag von Beschichtungsmaterial mittels Imprägnierung z.B. in einem Foulard umfassen.

Die Bandsegmente sollten eine Erstreckung in der zweiten Richtung von maximal 6 m, vorzugsweise maximal 2,5 m haben. Eine Untergrenze hierfür ist nicht zwingend gegeben, sollte jedoch nicht unter 1 cm, vorzugsweise 0,5 m liegen. Die Beschichtung wird zweckmäßigerweise so ausgeführt, dass sich ein in Querrichtung des Bandes erstreckender Beschichtungsstrich ergibt.

Als Trägerstruktursegmente kommen insbesondere Flächengebilde, beispielsweise Fäden enthaltende Flächengebilde wie Gewebe, Gewirke und/oder Fadengelege, aber auch Drahtgliederbänder mit sich in Querrichtung erstreckenden Drahtwendeln in Frage. Dabei können Drahtgliederbänder auch mit anderen Flächengebilden kombiniert werden, oder es können Flächengebilde verschiedener Art übereinander gelegt und miteinander verbunden werden. Soweit ein Gewebe vorgesehen ist, sollten sich die Kettfäden in Querrichtung und die Schussfäden in Endlosrichtung des Bandes erstrecken. An den Nahtkanten der Bandsegmente bilden dann die Schussfäden Nahtschlaufen aus, die beispielsweise über Steckdrähte miteinander gekuppelt werden können. Vorzugsweise sollte das Gewebe als Rundgewebe ausgebildet sein, um auf diese Weise einen zweilagigen Aufbau des Gewebes zu erhalten.

Zur Verbindung der Bandsegmente können sämtliche üblichen Nahtarten verwendet werden, wie z.B. Ösen-, Klebe- oder Schweißnaht. Zweckmäßigerweise bilden die Trägerstruktursegmente hierzu an ihren in Querrichtung sich erstreckenden Segmentkanten Nahtschlaufen aus. Bei Geweben können diese Nahtschlaufen - wie oben schon erwähnt - von den Schussfäden gebildet werden. Bei Drahtgliederbändern ergeben sich die Nahtschlaufen durch die jeweils an den Segmentkanten verlaufenden Drahtwendeln. Die Nahtschlaufen benachbarter Trägerstruktursegmente können nach Überlappung durch jeweils zumindest einen Steckdraht miteinander scharnierartig gekuppelt werden, wenn sie zuvor in Überlappung gebracht worden sind.

Je nach Anwendungszweck ist es nicht erforderlich, die Nähte mit einer Beschichtung abzudecken. Dürfen sich aber die Eigenschaften des Bandes im Nahtbereich nicht wesentlich ändern, sollten die Nähte mittels Beschichtungsmaterial abgedeckt werden. Dies kann beispielsweise durch die Nähte überspannende, jeweils an einer Segmentkante von zwei benachbarten Segmentkanten oder jeweils an beiden benachbarten Segmentkanten angeformte Klappen vorzugsweise aus Beschichtungsmaterial geschehen. Stattdessen oder in Kombination damit kann Beschichtungsmaterial aber auch in die Nähte verfüllt werden.

Die Beschichtung kann ein- oder beidseitig aufgetragen sein. Sie kann unterschiedliche Struktur haben. So kann sie zum Beispiel als geschlossene Schicht und damit flüssigkeitsdicht ausgebildet sein, aber auch offenporig gestaltet sein, um für Luft oder Flüssigkeit durchlässig zu sein. Letztere Beschichtung kann auch durch Imprägnierung aufgetragen sein. Als Material für die Beschichtung kommen vor allem die für solche Bänder bisher auch schon verwendeten Materialien in Frage, insbesondere Polymere wie Silikonelastomer, Polyurethan, Kautschuk, Polypropylen, Polyamid etc. Soweit die Trägerstruktursegmente als textile Flächengebilde ausgebildet sind, können die Fäden als Monofilamente, Multifilamente, Spinnfasergarne und/oder Zwirne ausgebildet sein. Die Trägerstruktursegmente bestehen vorzugsweise aus Polymermaterial. Hierfür kommen insbesondere PA, PET, PPS, PEEK und/oder PU in Frage. Dies gilt für die Fäden gewebter und gewirkter Flächengebilde wie auch für die Drahtwendeln und Steckdrähte eines Drahtgliederbandes oder durch andere Verfahren hergestellte Flächengebilde.

Die sich auf das Verfahren zur Herstellung beziehende Aufgabe wird erfindungsgemäß dadurch gelöst, dass zunächst Bandsegmente einzeln derart hergestellt werden, dass im Umriss rechteckige Trägerstruktursegmente erstellt werden, deren in einer Richtung verlaufenden Segmentkanten eine Länge haben, die der Erstreckung des damit herzustellenden endlosen Bandes in dessen Querrichtung entspricht, dass dann die Trägerstruktursegmente vorzugsweise einzeln mit einer Beschichtung durch Relativbewegung zwischen Beschichtungsmaterial und Trägerstruktursegment in vorgenannter Querrichtung versehen werden, und dass schließlich die so erhaltenen Bandsegmente in Endlosrichtung des Bandes hintereinander mit ihren in Endlosrichtung verlaufenden Segmentkanten fluchtend angeordnet und an ihren jeweils benachbarten, in Querrichtung verlaufenden Segmentkanten miteinander verbunden werden. Wie schon oben im Einzelnen näher ausgeführt, können mit diesem Verfahren Bänder hergestellt werden, deren Erstreckung in Querrichtung (Breite) wesentlich größer ist als die Beschichtungsbreite der augenblicklich erhältlichen Beschichtungsmaschinen.

In Ausbildung des vorbeschriebenen Verfahrens soll die Beschichtung derart vorgenommen werden, dass der Bereich der Nähte an den in Querrichtung des Bandes verlaufenden Segmentkanten der Trägerstruktursegmente unbeschichtet bleibt. Dies erleichtert die Verbindung der Bandsegmente mittels einer Naht.

Die Beschichtung kann in Form einer Schmelze, einer Dispersion oder eines Schaums auf die Trägerstruktursegmente aufgetragen werden. Vor dem Auftrag der Beschichtung sollen die Trägerstruktursegmente thermofixiert werden.

Wie schon oben erwähnt, ist es zweckmäßig, dass die Bandsegmente mit einer Erstreckung in der Richtung, die nach Fertigstellung des Bandes die Endlosrichtung bildet, hergestellt werden, die maximal ca. 6 m, vorzugsweise maximal ca. 2,5 m beträgt.

Die Trägerstruktursegmente sollen in der Weise hergestellt werden, dass sie an den Segmentkanten, die sich bei dem fertigen Band in Querrichtung erstrecken, Nahtschlaufen ausbilden. Dies erleichtert die Verbindung der Bandsegmente untereinander und eröffnet auch die Möglichkeit, die Nahtschlaufen über zumindest einen Steckdraht miteinander scharnierartig zu kuppeln, nachdem sie zuvor in Überlappung gebracht worden sind.

Schließlich ist nach der Erfindung vorgesehen, dass an zumindest einer der beiden Segmentkanten der Bandsegmente, welche nach Zusammenfügen zu dem Band in Querrichtung verlaufen, Klappen aus Beschichtungsmaterial angeformt sind, die jeweils die Nähte nach dem Zusammenfügen der Bandsegmente abdecken. Es können aber auch an den jeweils beiden benachbarten Segmentkanten solche Klappen vorgesehen sein.

In der Zeichnung ist die Erfindung anhand von Ausführungsbeispielen näher veranschaulicht. Es zeigen:
- Figur 1: die Seitenansicht eines erfindungsgemäßen endlosen Bandes;
- Figur 2: eine vergrößerte Seitenansicht einer zwei Bandsegmente verbindenden Naht;
- Figur 3: eine Draufsicht auf ein weiteres, endloses Band nach der Erfindung.

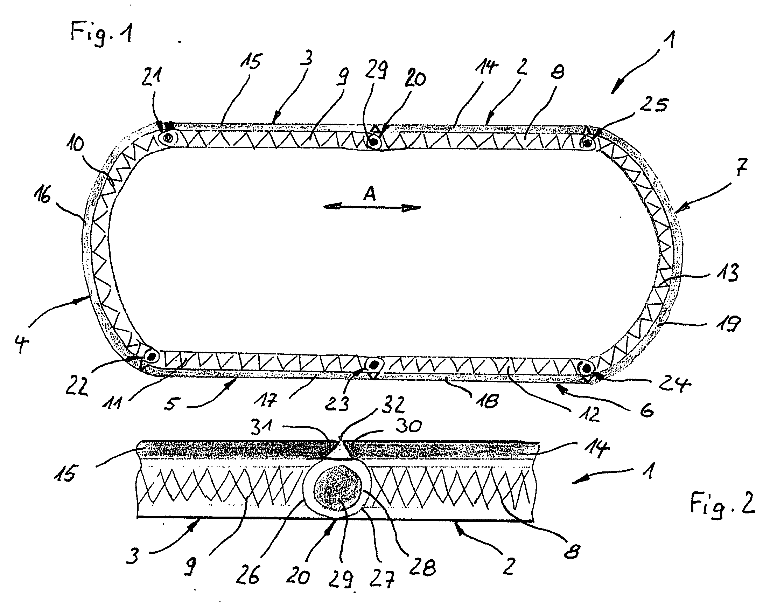

Das in Figur 1 dargestellte Band 1 ist aus sechs Bandsegmenten 2 bis 7 zusammengesetzt, wobei die Bandsegmente 2, 3, 5 und 6 gleiche Erstreckungen in Endlosrichtung (Doppelpfeil A) haben, während die Bandsegmente 4, 7 etwas länger in diese Richtung ausgebildet sind. In Querrichtung, d.h. senkrecht zur Endlosrichtung (Doppelpfeil A) und damit senkrecht zur Zeichnungsebene, haben sie sämtlich die gleiche Erstreckung, und ihre in Endlosrichtung (Doppelpfeil A) verlaufenden Segmentkanten fluchtend auf jeder Seite des Bandes 1 miteinander.

Die Bandsegmente 2 bis 7 bestehen jeweils aus Trägerstruktursegmenten 8 bis 13, die auf ihren Außenseiten jeweils mit einer eigenen Beschichtung 14 bis 19 versehen sind. Die Trägerstruktursegmente 8 bis 13 sind lediglich schematisch dargestellt und können beispielsweise als Gewebe, Gewirke oder auch Drahtgliederbänder ausgebildet sein. Die Beschichtungen 14 bis 19 bestehen aus einem Polymermaterial, das nach Herstellung der Trägerstruktursegmente 8 bis 13 einzeln auf diese aufgebracht worden ist, indem das jeweilige Trägerstruktursegment 8 bis 13 in Richtung senkrecht zur Zeichnungsebene, d.h. in Querrichtung des Bandes 1, durch eine Beschichtungsmaschine hindurchbewegt worden ist.

Die Trägerstruktursegmente 8 bis 13 sind an ihren jeweils benachbarten, in Querrichtung des Bandes 1 verlaufenden Segmentkanten über sogenannte Steckdrahtnähte 20 bis 25 miteinander gekuppelt. Diese Steckdrahtnähte 20 bis 25 sind identisch ausgebildet. Figur 2 zeigt beispielhaft in vergrößerter Darstellung die Ausbildung der Steckdrahtnaht 20. An den in Querrichtung verlaufenden Segmentkanten bilden die Trägerstruktursegmente 8, 9 eine Vielzahl von in Querrichtung nebeneinander liegenden Nahtschlaufen aus, von denen hier die zu dem Trägerstruktursegment 8 gehörenden Nahtschlaufe 26 und die zu dem Trägerstruktursegment 9 gehörende Nahtschlaufe 27 zu sehen sind. Diese Nahtschlaufen 26, 27 überlappen sich unter Ausbildung eines sich in Querrichtung des Bandes 1 erstreckenden, im Querschnitt im Wesentlichen kreisförmigen Kanals 28, in den ein sich über die gesamte Quererstreckung des Bandes 1 gehender Steckdraht 29 eingesetzt ist. Auf diese Weise ergibt sich eine Art Scharniergelenk, das die beiden benachbarten Trägerstruktursegmente 8, 9 und damit auch die Bandsegmente 2, 3 miteinander gelenkig verbindet.

Die Beschichtungen 14, 15 der Trägerstruktursegmente 8, 9 sind im Bereich der jeweils zugehörigen Nahtschlaufen 26, 27 nicht mit den jeweils zugehörigen Trägerstruktursegmenten 8, 9 verbunden. Vielmehr bilden sie an den in Querrichtung verlaufenden Segmentkanten keilförmige Klappen 30, 31 aus, die sich über die Steckdrahtnaht 20 erstrecken, so dass sich im Bereich der freien Oberfläche nur ein geringfügiger Spalt 32 ergibt, jedenfalls wenn sich die Bandsegmente 2, 3 - wie in Figur 2 dargestellt - in gleicher Ebene befinden. Dieser Spalt 32 öffnet sich ein wenig, wenn das Band 1 über Umlenkwalzen geführt wird.

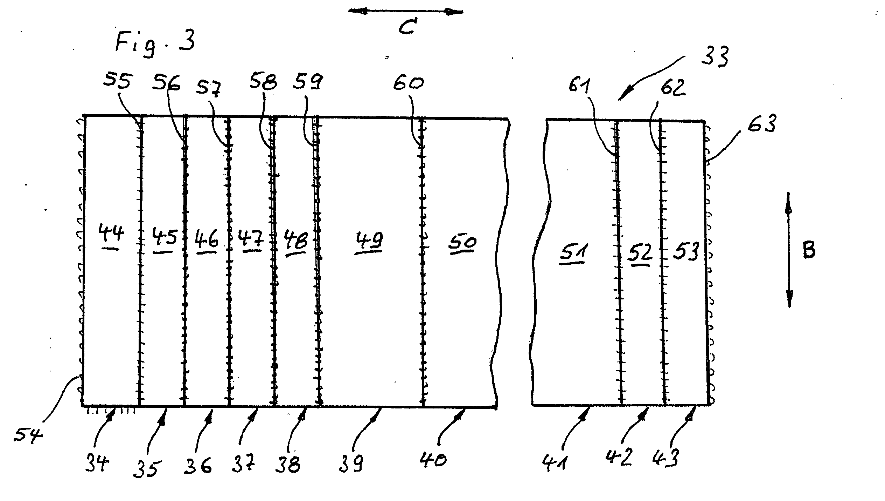

Figur 3 zeigt in der Draufsicht ein weiteres Band 33 mit Bandsegmenten 34 bis 43. Sie haben jeweils rechteckigen Umriss mit identischer Erstreckung in Querrichtung (Doppelpfeil B) und teilweise unterschiedlicher Erstreckung in Endlosrichtung (Doppelpfeil C). Sie sind in der gleichen Weise aufgebaut wie die Bandsegmente 2 bis 7 bei dem in den Figuren 1 und 2 dargestellten Band 1, haben also obenseitig Beschichtungen 44 bis 53 und darunterliegende Trägerstruktursegmente. Die Beschichtungen 44 bis 53 sind in Querrichtung (Doppelpfeil B) aufgetragen worden. Die Bandsegmente 34 bis 43 sind über hier lediglich schematisch dargestellte Steckdrahtnähte 54 bis 63 miteinander verbunden.

## Patentansprüche

1. Endloses Band (1, 33) mit einer sich über die gesamte Fläche des Bandes erstreckenden Trägerstruktur, die mit zumindest einer sich ebenfalls über die gesamte Fläche des Bandes erstreckenden Beschichtung versehen ist, wobei das Band (1, 33) aus mehreren, in Endlosrichtung (A, C) hintereinander angeordneten Bandsegmenten (2-7, 34-43) zusammengesetzt ist, die jeweils ein eigenes Trägerstruktursegment (8-13) mit eigener Beschichtung (14-19, 44-53) aufweisen, wobei die Erstreckung der Bandsegmente (2-7, 34-43) und deren Trägerstruktursegmente (8-13) mit Beschichtung (14-19, 44-53) in einer zur Endlosrichtung (A, C) senkrechten Querrichtung (B) der Erstreckung des Bandes (1, 33) in dieser Richtung entspricht und die Bandsegmente (2-7, 34-43) über sich in Querrichtung (B) erstreckende Nähte (20-25, 54-63) miteinander verbunden sind.

2. Band nach Anspruch 1, **dadurch gekennzeichnet, dass** die Bandsegmente (2-7, 34-43) eine Erstreckung in Endlosrichtung (A, C) von maximal 6 m, vorzugsweise maximal 2,5 m haben.

3. Band nach Anspruch 1 oder 2, **dadurch gekennzeichnet, dass** die Beschichtung (14-19, 44-53) einen sich in Querrichtung (B) erstreckenden Beschichtungsstrich aufweist.

4. Band nach einem der Ansprüche 1 bis 3, **dadurch gekennzeichnet, dass** die Trägerstruktursegmente (8-13) als Flächengebilde, zum Beispiel Fäden enthaltende Flächengebilde wie Gewebe, Gewirke und/oder Fadengelege, und/oder als Drahtgliederband mit sich in Querrichtung (B) erstreckenden Drahtwendeln ausgebildet sind, wobei das Flächengebilde vorzugsweise zumindest zweilagig aufgebaut ist.

5. Band nach Anspruch 4, **dadurch gekennzeichnet, dass** das Gewebe sich in Querrichtung (B) erstreckende Kettfäden und sich in Endlosrichtung (A, C) erstreckende Schussfäden aufweist, insbesondere das Gewebe als Rundgewebe ausgebildet ist.

6. Band nach einem der Ansprüche 1 bis 5, **dadurch gekennzeichnet, dass** die Trägerstruktursegmente (8-13) an ihren in Querrichtung (B) sich erstreckenden Segmentkanten Nahtschlaufen (26, 27) ausbilden, insbesondere dass sich die Nahtschlaufen (26, 27) benachbarter Trägerstruktursegmente (8-13) überlappen und jeweils über zumindest einen Steckdraht (29) miteinander scharnierartig gekuppelt sind.

7. Band nach einem der Ansprüche 1 bis 6, **dadurch gekennzeichnet, dass** die Nähte (20-25, 54-63) beschichtungslos ausgebildet sind oder dass sie mittels Beschichtungsmaterial abgedeckt sind, insbesondere dass das Beschichtungsmaterial die Nähte (20-25, 54-63) überspannende, jeweils an einer Segmentkante von zwei benachbarten Bandsegmenten oder jeweils an beiden benachbarten Segmentkanten angeformte Klappen (30, 31) ausbilden und/oder dass Beschichtungsmaterial in die Nähte verfüllt ist.

8. Band nach einem der Ansprüche 1 bis 7, **dadurch gekennzeichnet, dass** die Beschichtung (14-19, 44-53) als Polymerbeschichtung, z.B. aus einem Silikon, insbesondere Silikonelastomer, oder aus Polyurethan besteht und/oder dass die Flächengebilde Fäden aufweisen, die als Monofilamente, Multifilamente, Spinnfasergarne und/oder Zwirne ausgebildet sind und/oder dass die Trägerstruktursegmente (8-13) aus Polymermaterial, insbesondere PA, PET, PPS, PEEK und/oder PU, bestehen.

9. Verfahren zur Herstellung eines endlosen Bandes (1, 33) nach einem der Ansprüche 1 bis 8, **dadurch gekennzeichnet, dass** zunächst Bandsegmente (2-7, 34-43) einzeln derart hergestellt werden, dass im Umriss rechteckige Trägerstruktursegmente (8-13) erstellt werden, deren in einer Richtung verlaufenden Segmentkanten eine Länge haben, die der Erstreckung des damit herzustellenden endlosen Bandes (1, 33) in dessen Querrichtung (B) entspricht, dass dann die Trägerstruktursegmente (8-13) mit mindestens einer Beschichtung (14-19, 44-53) durch Relativbewegung zwischen Beschichtungsmaterial und Trägerstruktursegment (8-13) in vorgenannter Querrichtung (B) versehen werden und dass schließlich die so erhaltenen Bandsegmente (2-7, 34-43) in Endlosrichtung (A, C) hintereinander mit ihren in Endlosrichtung (A, C) verlaufenden Segmentkanten fluchtend angeordnet und an ihren jeweils benachbarten, in Querrichtung (B) verlaufenden Segmentkanten miteinander verbunden werden.

10. Verfahren nach Anspruch 9, **dadurch gekennzeichnet, dass** die Beschichtung (14-19, 44-53) derart vorgenommen wird, dass der Bereich der Nähte (20-25, 54-63) an den in Querrichtung (B) verlaufenden Segmentkanten der Trägerstruktursegmente (8-13) zumindest zunächst unbeschichtet bleibt.

11. Verfahren nach Anspruch 9 oder 10, **dadurch gekennzeichnet, dass** die Beschichtung (14-19, 44-53) in Form einer Schmelze, einer Dispersion oder eines Schaums auf die Trägerstruktursegmente (8-13) aufgetragen wird.

12. Verfahren nach einem der Ansprüche 9 bis 11, **dadurch gekennzeichnet, dass** die Trägerstruktursegmente (8-13) vor dem Auftrag der Beschichtung (14-19, 44-53) thermofixiert werden.

13. Verfahren nach einem der Ansprüche 9 bis 12, **dadurch gekennzeichnet, dass** die Bandsegmente (2-7, 34-43) mit einer Erstreckung in der Richtung, die nach Erstellen des Bandes (1, 33) die Endlosrichtung (A, C) bildet, hergestellt werden, die maximal 6 m, vorzugsweise maximal 2,5 m beträgt.

14. Verfahren nach einem der Ansprüche 9 bis 13, **dadurch gekennzeichnet, dass** die Trägerstruktursegmente (8-13) in der Weise hergestellt werden, dass sie an den Segmentkanten, die bei dem endlosen Band (1, 33) sich in Querrichtung (B) erstrecken, Nahtschlaufen (26, 27) ausbilden, insbesondere dass beim Aneinanderfügen der Bandsegmente (2-7, 34-43) die Nahtschlaufen (26, 27) in Überlappung gebracht und jeweils über zumindest einen Steckdraht (29) miteinander scharnierartig gekuppelt werden.

15. Verfahren nach einem der Ansprüche 1 bis 14, **dadurch gekennzeichnet, dass** an zumindest einer der beiden Segmentkanten der Bandsegmente (2-7, 34-43), welche nach Zusammenfügen zu dem Band (1, 33) in Querrichtung (B) verlaufen, Klappen (30, 31) aus Beschichtungsmaterial angeformt sind, die jeweils die Nähte (20-25, 54-63) nach dem Zusammenfügen der Bandsegmente (2-7, 34-43) abdecken.

## Claims

1. An endless belt (1, 33) that has a carrier structure extending over the entire surface of the belt and which is provided with at least one coating also extending over the entire surface of the belt, the belt (1, 33) being made up of a number of belt segments (2-7, 34-43) arranged one behind the other in the endless direction (A, C) and each having its own carrier structure segment (8-13) with its own coating (14-19, 44-53), the extension of the belt segments (2-7, 34-43) and the carrier structure segments (8-13) of the latter with the coating (14-19, 44-53) in a transverse direction (B) perpendicular to the endless direction (A, C) corresponding to the extension of the belt (1, 33) in this direction and the belt segments (2-7, 34-43) being connected to one another by seams (20-25, 54-63) extending in the transverse direction (B).

2. The belt according to Claim 1, **characterised in that** the belt segments (2-7, 34-43) have a maximum extension in the endless direction (A, C) of 6 m, preferably 2.5 m.

3. The belt according to Claim 1 or 2, **characterised in that** the coating (14-19, 44-53) has a coating stroke extending in the transverse direction (B).

4. The belt according to any of Claims 1 to 3, **characterised in that** the carrier structure segments (8-13) are in the form of a textile fabric, for example a textile fabric containing threads such as a woven fabric, a knitted fabric and/or a laid scrim, and/or of a wire link belt with coiled filaments extending in the transverse direction (B), the textile fabric preferably being made in at least two layers.

5. The belt according to Claim 4, **characterised in that** the woven fabric has warp threads extending in the transverse direction (B) and weft threads extending in the continuous direction (A, C), in particular the woven fabric is in the form of a circular woven fabric.

6. The belt according to any of Claims 1 to 5, **characterised in that** the carrier structure segments (8-13) form seam loops (26, 27) on their segment edges extending in the transverse direction (B), in particular that the seam loops (26, 27) of adjacent carrier structure segments (8-13) overlap and are each coupled to one another in the manner of a hinge by means of at least one pintle wire (29).

7. The belt according to any of Claims 1 to 6, **characterised in that** the seams (20-25, 54-63) are formed without any coating or that they are covered by means of coating material, in particular that the coating material form flaps (30, 31) spanning the seams (20-25, 54-63), respectively moulded onto a segment edge of two adjacent belt segments or respectively onto the two adjacent segment edges, and/or that the seams are filled with coating material.

8. The belt according to any of Claims 1 to 7, **characterised in that** the coating (14-19, 44-53), as a polymer coating, is made e.g. of a silicone, in particular silicone elastomer, or polyurethane, and/or that the textile fabric has threads which are in the form of monofilaments, multifilaments, spun fibre yarns and/or twines, and/or that the carrier structure segments (8-13) are made of polymeric material, in particular PA, PET, PPS, PEEK and/or PU.

9. A method for the production of an endless belt (1, 33) according to any of Claims 1 to 8, **characterised in that** belt segments (2-7, 34-43) are first of all produced individually such that carrier structure segments (8-13) with a rectangular outline are produced, the segment edges of which running in one direction are of a length which corresponds to the extension of the endless belt (1, 33) to be produced with the latter in its transverse direction (B), that the carrier structure segments (8-13) are then provided with at least one coating (14-19, 44-53) by a relative movement between the coating material and the carrier structure segment (8-13) in the aforementioned transverse direction (B), and that finally the belt segments (2-7, 34-43) obtained in this way are arranged flush one behind the other in the continuous direction (A, C) with their segments edges running in the continuous direction (A, C) and are connected to one another on their respectively adjacent segment edges running in the transverse direction (B).

10. The method according to Claim 9, **characterised in that** the coating (14-19, 44-53) is applied in such a way that the area of the seams (20-25, 54-63) remains uncoated, at least initially, on the segments edges of the carrier structure segments (8-13) running in the transverse direction (B).

11. The method according to Claim 9 or 10, **characterised in that** the coating (14-19, 44-53) is applied to the carrier structure segments (8-13) in the form of a molten mass, a dispersion or a foam.

12. The method according to any of Claims 9 to 11, **characterised in that** the carrier structure segments (8-13) are heat-set before applying the coating (14-19, 44-53).

13. The method according to any of Claims 9 to 12, **characterised in that** the belt segments (2-7, 34-43) are produced with an extension in the direction that forms the continuous direction (A, C) after producing the belt (1, 33) which is at most 6 m, preferably at most 2.5 m.

14. The method according to any of Claims 9 to 13, **characterised in that** the carrier structure segments (8-13) are produced in a such a way that they form seam loops (26, 27) on the segment edges that extend in the transverse direction (B) of the endless belt (1, 33), in particular that when the belt segments (2-7, 34-43) are joined to one another the seam loops (26, 27) are overlapped and are each coupled to one another in the manner of a hinge by means of at least one pintle wire (29).

15. The method according to any of Claims 1 to 14, **characterised in that** flaps (30, 31) made of coating material are moulded onto at least one of the two segment edges of the belt segments (2-7, 34-43) which run in the transverse direction (B) after joining to the belt (1, 33), which flaps each cover the seams (20-25, 54-63) after joining together the belt segments (2-7, 34-43).

## Revendications

1. Bande sans fin (1, 33) comportant une structure de support qui s'étend sur l'intégralité de la surface de ladite bande et qui est pourvue d'un revêtement s'étendant également sur l'intégralité de la surface de ladite bande, la bande (1, 33) étant composée de plusieurs segments de bande (2-7, 34-43) lesquels sont disposés les uns derrière les autres dans la direction sans fin (A, C) et lesquels comportent chacun leur propre segment de structure de support (8-13) pourvu de son propre revêtement (14-19, 44-53), l'étendue des segments de bande (2-7, 34-43) et de leurs segments de structure de support (8-13) pourvus d'un revêtement (14-19, 44-53) correspondant, dans une direction transversale (B) qui est perpendiculaire à la direction sans fin (A, C), à l'étendue de la bande (1, 33) dans cette direction, et les segments de bande (2-7, 34-43) étant reliés les uns aux autres au moyen de joints (20-25, 54-63) s'étendant dans la direction transversale (B).

2. Bande selon la revendication 1, **caractérisée en ce que** les segments de bande (2-7, 34-43) présentent, dans la direction sans fin (A, C) une étendue inférieure ou égale à 6 m, de préférence inférieure ou égale à 2,5 m.

3. Bande selon les revendications 1 ou 2, **caractérisée en ce que** le revêtement (14-19, 44-53) comporte une couche de revêtement s'étendant dans la direction transversale (B).

4. Bande selon l'une des revendications 1 à 3, **caractérisée en ce que** les segments de structure de support (8-13) sont réalisés sous forme de structures planes, réalisés par exemple de structures planes contenant des fils, telles que les tissus, les tricots et/ou les nappes de fils, et/ou sous forme d'une bande à mailles métalliques comportant des spirales métalliques qui s'étendent dans la direction transversale (B), ladite structure plane étant préférentiellement constituée d'au moins deux couches.

5. Bande selon la revendication 4, **caractérisée en ce que** ledit tissu comporte des fils de chaîne s'étendant dans la direction transversale (B) et des fils de trame s'étendant dans la direction sans fin (A, C), le tissu étant notamment réalisé sous forme d'un tissu tubulaire.

6. Bande selon l'une des revendications 1 à 5, **caractérisée en ce que** les segments de structure de support (8-13) forment, sur leurs bords de segment s'étendant dans la direction transversale (B), des boucles de jonction (26, 27), notamment que les boucles de couture (26, 27) qui se trouvent sur des segments de structure de support (8-13) voisins se chevauchant notamment tout en étant accouplées les unes aux autres au moyen d'au moins un fils d'insertion métallique (29), à la manière d'une charnière.

7. Bande selon l'une des revendications 1 à 6, **caractérisée en ce que** les joints (20-25, 54-63) sont réalisés sans revêtement ou qu'ils sont recouverts au moyen d'un matériau de revêtement, ledit matériau de revêtement formant notamment des pattes (30, 31) rapportées, à chaque instance, sur l'une des bords de segments appartenant à deux segments de bande voisins ou, à chaque instance, sur les deux bords de segments voisins, de manière à recouvrir les joints (20-25, 54-63), et/ou que lesdits joints sont remplis avec du matériau de revêtement.

8. Bande selon l'une des revendications 1 à 7, **caractérisée en ce que** le revêtement (14-19, 44-53) est réalisé sous forme d'un revêtement en polymère, constitué par exemple d'une silicone, notamment d'un élastomère de silicone, ou de polyuréthane, et/ou que lesdites structures planes comportent des fils réalisés sous forme de monofilaments, de multifilaments, de fils filés et/ou de fils retors, et/ou que les segments de structure de support (8-13) sont constitués de matériau polymère, notamment de PA, PET, PPS, PEEK et/ou de PU.

9. Procédé de fabrication d'une bande sans fin (1, 33) selon l'une des revendications 1 à 8, **caractérisé en ce que** l'on fabrique d'abord séparément des segments de bande (2-7, 34-43), que l'on réalise des segments de structure de support (8-13) à contour rectangulaire dont les bords de segment, s'étendant dans une direction donnée, présentent une longueur correspondant à l'étendue que la bande sans fin (1, 33), dont ils constituent les composants à assembler, présente dans sa direction transversale (B), que l'on applique ensuite au moins un revêtement (14-19, 44-53) sur les segments de structure de support (8-13) en effectuant un déplacement relatif entre le matériau de revêtement et le segment de structure de support (8-13) selon ladite direction transversale (B), et que l'on dispose enfin les segments de bande (2-7, 34-43) ainsi obtenus les uns derrière les autres dans la direction sans fin (A, C), de manière à ce que leurs bords de segment s'étendant dans la direction sans fin (A, C) soient alignés et qu'ils soient reliés les uns aux autres, à chacun instance, au niveau de leurs bords de segment voisins s'étendant dans la direction transversale (B).

10. Procédé selon la revendication 9, **caractérisé en ce que** le revêtement (14-19, 44-53) est réalisé de manière à ce que, au niveau des bords de segments appartenant aux segments de structure de support (8-13) et s'étendant dans la direction transversale (B), la zone des joints (20-25, 54-63) reste dépourvue de tout revêtement, au moins dans un premier temps.

11. Procédé selon les revendications 9 ou 10, **caractérisé en ce que** le revêtement (14-19, 44-53) est appliqué sur les segments de structure de support (8-13) sous forme d'une matière en fusion, d'une dispersion ou d'une mousse.

12. Procédé selon l'une des revendications 9 à 11, **caractérisé en ce que,** préalablement à l'application du revêtement (14-19, 44-53), les segments de structure de support (8-13) subissent une thermofixation.

13. Procédé selon l'une des revendications 9 à 12, **caractérisé en ce que** les segments de bande (2-7, 34-43) sont fabriqués de manière à ce qu'ils présentent, dans la direction destinée à former la direction sans fin (A, C) une fois la bande (1, 33) réalisée, une étendue inférieure ou égale à 6 m, de préférence inférieure ou égale à 2,5 m.

14. Procédé selon l'une des revendications 9 à 13, **caractérisé en ce que** les segments de structure de support (8-13) sont fabriqués de manière à ce qu'ils forment, au niveau des bords de segment faisant partie de la bande sans fin (1, 33) et s'étendant dans la direction transversale (B), des boucles de jonction (26, 27) et que les boucles de jonction (26, 27) soient notamment disposées en se chevauchant lors de l'assemblage des segments de bande (2-7, 34-43) et sont accouplées les unes aux autres au moyen d'au moins un élément d'insertion métallique (29), à la manière d'une charnière.

15. Procédé selon l'une des revendications 1 à 14, **caractérisé en ce qu**'au moins un des deux bords de segment faisant partie des segments de bande (2-7, 34-43) et s'étendant dans la direction transversale (B) une fois la bande (1, 33) assemblée, est pourvu de pattes (30, 31) rapportées qui sont réalisées en matériau de revêtement et qui viennent recouvrir, après l'assemblage des segments de bande (2-7, 34-43), les joints (20-25, 54-63) à chaque instance.
